Europäisches Patentamt

European Patent Office

Office européen des brevets

(11) Veröffentlichungsnummer: **0 257 269**
A2

## (12) EUROPÄISCHE PATENTANMELDUNG

(21) Anmeldenummer: 87110108.5

(22) Anmeldetag: 14.07.87

(51) Int. Cl.4: **B60C 11/00** , B60C 9/18 , B60C 11/11

(30) Priorität: 19.08.86 DE 3628042

(43) Veröffentlichungstag der Anmeldung:
02.03.88 Patentblatt 88/09

(84) Benannte Vertragsstaaten:
AT BE DE ES FR GB IT NL SE

(71) Anmelder: METZELER KAUTSCHUK GMBH
Gneisenaustrasse 15
D-8000 München 50(DE)

(72) Erfinder: Kronthaler, Peter, Dr.
Alte Allee 56
D-8000 München 80(DE)

(74) Vertreter: Michelis, Theodor, Dipl.-Ing.
Gneisenaustrasse 15
D-8000 München 50(DE)

(54) Motorradreifen mit Motocross-Profilausführung.

(57) Bei einem Motorradreifen mit Motocross-Profilausführung ist zur sicheren Verankerung der Profilklötze und einem Verhindern des Ausreißens erfindungsgemäß vorgesehen, daß im Bereich der Profilklötze (3...7) eine gesonderte, oberste Karkassgewebelage (8) vorgesehen ist, deren Fäden (10) innerhalb der Profilklötze (3...7) netzartig dicht unterhalb deren Oberfläche liegen.

FIG . 1

EP 0 257 269 A2

## Motorradreifen mit Motocross-Profilausführung

Die Erfindung bezieht sich auf einen Motorradreifen mit Motocross-Profilausführung in Form von Profilklötzen mit einer Höhe von 10 bis 20 mm.

Bei derartigen Motocross-Reifen besteht das Profil aus einzelnen Klötzen, die mehr oder weniger in Quer-und Umfangsrichtung verschachtelt angeordnet sind. Das Profil ist dabei so zu gestalten, daß eine optimale Kraftübertragung möglich ist. Zunächst wäre dafür eine möglichst große Profiltiefe wünschenswert. Derartige Reifen halten jedoch den starken Beanspruchungen, insbesondere bei leistungsstarken Motorrädern, nicht stand, da sich selbst bei Verwendung von auf Strukturfestigkeit optimierten Laufflächenmischungen Profilausbrüche nicht vermeiden lassen. Für längere Hochgeschwindigkeitsbeanspruchungen, wie sie bei Langstreckenrennen auftreten, besteht immer die Gefahr, daß bei Motorradreifen, selbst wenn sie in der Traktion zufriedenstellend sind, Profilklötze ausbrechen.

Der Erfindung liegt daher die Aufgabe zugrunde, einen Motorradreifen zu schaffen und ein Verfahren zu dessen Herstellung anzugeben, bei dem ein Ausreißen von Profilklötzen praktisch nicht mehr möglich ist.

Zur Lösung dieser Aufgabe ist erfindungsgemäß vorgesehen, daß im Bereich der Profilklötze eine gesonderte Karkass-Gewebelage vorgesehen ist, deren Fäden innerhalb der Profilklötze netzartig dich unterhalb deren Oberfläche liegen.

Damit liegt der Erfindung das Prinzip zugrunde, die Verankerung der Profilklötze im Karkassgewebe zu verbessern. Dadurch, daß jetzt eine Gewebelage mit ihren Fäden bis in die Profilklötze reicht, werden diese sicher daran gehindert, auch bei hohen Beanspruchungen abzureißen und wegzufliegen.

Zweckmäßigerweise ist die Gewebelage unter einem Winkel von 0 bis 80°, insbesondere 45 bis 80°, zur Umfangsrichtung angeordnet.

Die Gewebelage kann über den Umfang mehrfach unterteilt und überlappt aufgelegt sein.

Es ist dabei auch möglich, daß die oberste Gewebelage mit einer weiteren Gummischicht abgedeckt ist.

Bei einem Verfahren zur Herstellung eines solchen Motorradreifens ist erfindungsgemäß vorgesehen, daß im Bereich der Profilklötze auf die oberste Gewebelage der Karkasse eine Gummiplatte und darauf eine frei Gewebelage aufgelegt werden und der Reifen anschließend bombiert wird. Damit ergibt sich also ein Abstand der obersten freien Gewebelage zur Karkasse, der größer ist als der Abstand der Karkassenlagen zueinander. Beim Bombieren werden die Gewebefäden somit in die Profilklötze verformt und liegen damit im vulkanisierten Reifen nicht mehr in einer äquidistanten Entfernung zur Karkasse, sondern legen sich wie eine netzförmige Struktur in die Profilklötze, wodurch eine Gewebearmierung dieser Klötze erreicht wird.

Die zwischengelegte Gummiplatte kann dabei eine Dicke von 4 bis 10 mm aufweisen.

Gegebenenfalls ist es auch möglich, die oberste freiliegende Gewebelage mit einer weiteren Gummischicht von 1 bis 6 mm Dicke abzudecken.

Um bei nichtabgedeckten oberen Gewebefäden eine vorübergehende Traktionseinbuße durch ein Freiliegen der obersten Gewebefäden infolge des aufgetretenen Gummiabriebes zu vermeiden, ist es auch möglich, die Profilklötze soweit zu überschleifen, bis die auf der Klotzoberfläche erscheinenden Fäden abgeschliffen sind.

Anhand einer schematischen Zeichnung sind Aufbau und Wirkungsweise von Ausführungsbeispielen nach der Erfindung näher erläutert. Dabei zeigen

Fig. 1 einen Querschnitt durch einen Motocross-Reifen

Fig. 2 eine perspektivische Ansicht von oben auf einen Profilklotz mit eingezeichnetem Verlauf der Gewebefäden

Fig. 3 eine perspektivische Seitenansicht eines Profilklotzes mit einer weiteren Abdeckschicht und

Fig. 4 einen Teilquerschnitt durch zwei benachbarte Profilklötze mit überschliffener Klotzoberfläche

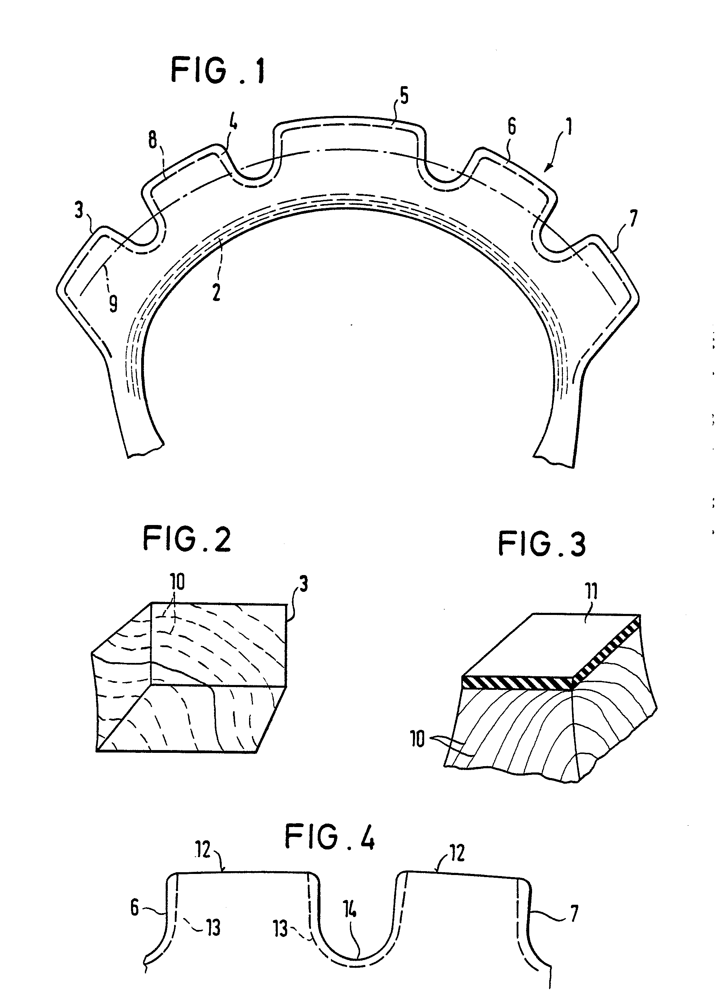

Fig. 1 zeigt einen Querschnitt durch einen fertigen, nach dem erfindugsgemäßen Verfahren hergestellten Reifen mit den einzelnen Gewebelagen. Dabei ist zunächst das herkömmliche Karkassgewebe 2 gezeigt, das beispielsweise aus drei Lagen bestehen kann. Dieser Motocross-Reifen 1 weist nach dem dargestellten Ausführungsbeispiel 5 nebeneinanderliegende Profilklötze 3,4,5,6 und 7 auf, in denen dicht unter der Oberfläche eine weitere Gewebelage 8 liegt, die ziemlich genau der Profilkontur folgt. Diese oberste Gewebelage 8 der Karkasse ist als freiliegende Lage nur im Bereich der Profilklötze 3 bis 7 angeordnet. Es besteht dabei ein Abstand dieser obersten Gewebelage 8 zur Karkasse 2, der größer ist als der Abstand der Karkassenlagen zueinander. Dies wird in einfacher Weise dadurch erreicht, daß zunächst eine strichpunktiert angedeutete Gummiplatte 9 zwischen Karkasse 2 und der daraufliegenden freien Gewebelage 8 eingelegt wird. Die Stärke dieser dazwischenliegenden Gummiplatte 9 kann variiert werden und dient als Mittel zur variablen Einstellung der Profilklotzsteifigkeit.

Bei der Bombage des Reifens 1 verformt sich nun die freiliegende Gewebelage 8 in die Profilklötze 3 bis 7. Die Fäden 10 dieser Gewebelage 8 liegen im vulkanisierten Reifen nicht mehr in einer äquidistanten Entfernung zur Karkasse 2, sondern legen sich - wie insbesonders aus der perspektivischen Ansicht nach Fig. 2 auf die Oberseite eines Profilklotzes 3 zu ersehen ist - wie eine netzförmige Struktur in die Profilklötze. Damit wird eine Gewebearmierung der Profilklötze erreicht. Ohne auf ausreichende Profiltiefe für die Traktion verzichten zu müssen, erreicht man somit eine erhebliche Versteifung dieser Profilklötze.

Die Gewebelage 8 wird zweckmäßigerweise unter einem Winkel von 0 bis 80° zur Umfangsrichtung, vorzugsweise jedoch 45 bis 80°, aufgelegt.

Es hat sich für die Herstellung als vorteilhaft erwiesen, wenn zur leichteren Verformbarkeit beim Bombageprozeß die freie Gewebelage 8 über den Umfang mehrfach geteilt und überlappt aufgelegt wird.

Die freiliegende Gewebelage 8 ist nach der Bombage an der Profiloberfläche mehr oder weniger durch den Laufflächengummi verdeckt. Es ist aber auch möglich - wie das aus der perspektivischen Ansicht nach Fig. 3 zu ersehen ist - noch eine zusätzliche Deckschicht 11 vorzusehen, die - je nach Dicke der zwischen Karkasse 2 und freiliegender Gewebelage 8 vorgesehenen Gummischicht 9 - 1 bis 6 mm betragen kann. Auch hierbei ist der Verlauf der Fäden 10 innerhalb des Profilklotzes deutlich zu erkennen.

Die Funktionsfähigkeit der erfindungsgemäßen Lösung sei anhand des nachfolgenden Beispiels erläutert:

Bei einem Reifen der Dimension 140/80 - 18 MXR 196 wurde eine Gewebelage entsprechend Bezugsziffer 8 unter Verwendung von Nylon 940 dtex mit 63 Fäden pro 10 cm und einer Breite von 205 mm unter einem Schnittwinkel von 72° aufgelegt. Auf diese Gewebelage wurde eine Abdeckplatte - entsprechend Pos. 11 in Fig. 3 - von 2,4 mm positioniert.

Dieser Reifen zeigte nach 500 km Dauergeschwindigkeitsbelastung auf felsigem Gelände keinerlei Ausbrüche von Profilklötzen, während bei Reifen gleicher Dimension ohne die zusätzliche Gewebelage Klotzausbrüche bereits nach 200 km auftraten.

In den Fällen, bei denen die Gewebelagen 8 sehr dicht an der Profiloberfläche der einzelnen Klötze angeordnet sind, kann es jedoch nach kurzer Einsatzdauer des Reifens zu kurzfristigen Einbußen in der Traktion dadurch kommen, daß die Gewebefäden auf den Klotzoberflächen freiliegen. Meist sind jedoch diese Gewebefäden nach wenigen Kilometern abgefahren, ohne die Versteifung in den Klotzflanken zu beeinträchtigen. Um die vorübergehende Einbuße in der Traktion zu vermeiden, ist es in solchen Fällen entsprechend dem in Fig. 4 gezeigten Querschnitt durch zwei benachbarte Profilklötze 6 und 7 möglich, die Profilklötze 6 und 7 soweit zu überschleifen, bis die auf der Klotzoberfläche 12 parallel zu dieser liegenden Fäden abgeschliffen sind und damit nur noch die an den Klotzflanken angenähert vertikal verlaufenden Fäden 13 stehenbleiben. Wie man nämlich insbesondere aus der Darstellung in dieser Figur ersieht, sind für die Versteifung der Profilklötze und damit des Verhinderns eines Ausbrechens primär die senkrecht zur Klotzoberfläche 12 verlaufenden Fadenbereiche 13, die unterhalb der Profilrille 14 in den nächsten Profilklotz reichen, maßgebend und bilden damit ein inneres Gerüst gegen das Abreißen dieser Klötze.

Insgesamt ist also ein Motorradreifen geschaffen, bei dem auch bei einer sehr grobstolligen Ausführung der einzelnen Profilklötze sicher verhindert wird, daß diese Klötze bei hohen Beanspruchungen ausreißen.

## Ansprüche

1. Motorradreifen mit Motocross-Profilausführung in Form von Profilklötzen mit einer Höhe von 10 bis 20 mm, dadurch gekennzeichnet, daß im Bereich der Profilklötze (3...7) eine gesonderte, oberste Karkass-Gewebelage (8) vorgesehen ist, deren Fäden (10) innerhalb der Profilklötze (3...7) netzartig dicht unterhalb deren Oberfläche liegen.

2. Motorradreifen nach Anspruch 1, dadurch gekennzeichnet, daß die Gewebelage (8) unter einem Winkel von 0 bis 80°, insbesondere 45 bis 80°, zur Umfangsrichtung angeordnet ist.

3. Motorradreifen nach Anspruch 1 oder 2, dadurch gekennzeichnet, daß die Gewebelage (8) über den Umfang mehrfach und unterteilt und überlappt aufgelegt ist.

4. Motorradreifen nach Anspruch 1 bis 3, dadurch gekennzeichnet, daß die oberste Gewebelage (8) mit einer weiteren Gummischicht (11) abgedeckt ist.

5. Verfahren zur Herstellung eines Motorradreifens nach Anspruch 1, dadurch gekennzeichnet, daß im Bereich der Profilklötze auf die oberste Gewebelage der Karkasse eine Gummiplatte und darauf eine weitere freie Gewebelage aufgelegt werden und der Reifen anschließend bombiert wird.

6. Verfahren nach Anspruch 5, dadurch gekennzeichnet, daß eine Gummiplatte mit einer Dicke von 4 bis 10 mm verwendet wird.

7. Verfahren nach Anspruch 5, dadurch gekennzeichnet, daß die freie Gewebelage in einem Winkel von 0 bis 80°, insbesondere 45 bis 80°, aufgelegt wird.

8. Verfahren nach Anspruch 1, dadurch gekennzeichnet, daß die obere Gewebelage mit einer weiteren Gummischicht von 1 bis 6 mm Dicke abgedeckt wird.

9. Verfahren nach Anspruch 5 bis 7, dadurch gekennzeichnet, daß die Oberseite der Profilklötze bis zum Abschleifen der horizontal liegenden Gewebefäden überschliffen wird.

# FIG.1

# FIG.2

# FIG.3

# FIG.4